# EUROPÄISCHE PATENTSCHRIFT

(11) **EP 2 996 838 B1**
(45) Veröffentlichungstag und Bekanntmachung des Hinweises auf die Patenterteilung: **19.02.2020**
(21) Anmeldenummer: 14721407.6
(22) Anmeldetag: 06.05.2014
(51) Int. Cl.: B64F 5/10, B64F 5/50, G05D 1/02

(54) **BEGLEITVERSORGUNGSPLATTFORM**
SUPPLY PLATFORM THAT MOVES ALONG
PLATE-FORME D'APPROVISIONNEMENT ASSOCIÉE

(30) Priorität: 14.05.2013 DE 202013102095 U
(43) Veröffentlichungstag der Anmeldung: 23.03.2016
(73) Patentinhaber: Hubtex Maschinenbau GmbH & Co. Kg, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2014/059173
(87) Internationale Veröffentlichungsnummer: WO 2014/184045

(56) Entgegenhaltungen:
- EP-A1- 1 829 642
- GB-A- 2 361 904
- JP-A- H09 290 330
- JP-A- H09 290 330
- US-A1- 2009 025 198
- US-B1- 6 226 848
- US-B1- 6 591 488
- "WHEELIFT traveling work platform", , 1. Januar 2011 (2011-01-01), XP055132401, Gefunden im Internet: URL:http://www.wheelift.com/downloads/_Cas eStudy-Aerospace CS03-LM.pdf [gefunden am 2014-07-30]

## Beschreibung

Die Erfindung betrifft eine Begleitversorgungsplattform für eine sich sehr langsam bewegende Montageeinheit großer Güter.

Die Begleitversorgungsplattform weist ein Antriebssystem, genauer gesagt ein Gesamtantriebssystem auf. Sie kann daher auch als selbstfahrende Begleitversorgungsplattform bezeichnet werden. Die Begleitversorgungsplattform weist Mittel auf, zum selbsttätigen, berührungslosen Folgen der Montageeinheit, bevorzugt hinsichtlich Geschwindigkeit und Richtung.

Die Montageeinheit kann anstelle oder zusätzlich zur Montage des großen Gutes auch der Bestückung des großen Gutes dienen. Die Montageeinheit kann daher auch als Montage- und/oder Bestückungseinheit bezeichnet werden. Die Montageeinheit bewegt sich sehr langsam, d. h. bevorzugt langsamer als 1 m pro Minute und besonders bevorzugt etwa 1 mm bis 100 mm pro Minute.

Bei dem großen Gut handelt es sich bevorzugt um ein Flugzeug. Große Güter, insbesondere Flugzeuge, werden während ihrer Montage sehr langsam bewegt, um einen ähnlichen Effekt zu erzielen, wie dies bei kleineren Gütern und Fließbandmontage der Fall ist. Die großen Güter werden dabei von einer sich mit der gleichen Geschwindigkeit wie das große Gut bewegenden Montageeinheit begleitet. Diese Montageeinheit kann an dem großen Gut vorübergehend befestigt sein.

Indem die Versorgungsplattform Mittel aufweist, um der Montageeinheit berührungslos zu folgen, kann die Montageeinheit und damit das System aus großem Gut und Montageeinheit von der Begleitversorgungsplattform mechanisch zumindest weitgehend unbeeinflusst bleiben. Es kann also erreicht werden, dass die Begleitversorgungsplattform zumindest nahezu keine Erhöhung der Belastung etwaiger zwischen dem großen Gut und der Montageeinheit vorhandener Befestigungsmittel bewirkt. Indem die Versorgungsplattform Mittel aufweist, um der Montageeinheit selbsttätig zu folgen, ist eine Voraussetzung dafür geschaffen, dass ein diese Aufgabe übernehmender Fahrer, während des Folgebetriebs, entbehrlich ist.

Aus der EP 1 829 642 A1 ist ein Fertigungsverfahren bekannt, bei dem ein Hauptarbeiter auf einem Hauptfahrzeug, auf dem ein Werkstück montiert ist, entlang einer Vielzahl von Fertigungsstationen fährt. Dieses Hauptfahrzeug fährt selbstständig einen vorbestimmten Weg. Es ist ein Hilfsfahrzeug mit einem Hilfsarbeiter vorgesehen, welches zusammen mit dem Hauptfahrzeug fährt. Zwischen dem Hauptfahrzeug und dem Hilfsfahrzeug kann eine kabellose Kommunikation vorgesehen sein.

Die JP 09290330 A offenbart einen Transferwagen, der, sobald er von einem Arbeitswagen überholt wird, mit diesem mittels eines Synchronmechanismus verbunden wird. Gleichzeitig wird der Antriebsmechanismus des Transferwagens ausgeschaltet und dieser wird durch den Antriebswagen gezogen, um synchron zu fahren. Zu einem späteren Zeitpunkt wird der Transferwagen von dem Arbeitswagen getrennt und kehrt selbsttätig zur Startposition zurück.

Aus der US 2009/0025198 A1 ist ein System mit einem Hauptmontagewagen und einem Hilfsmontagewagen bekannt, wobei der Hauptmontagewagen einen Antrieb aufweist und der Hilfsmontagewagen entweder über ein Gestänge dauerhaft oder über einen Mitnehmer temporär von dem Hauptmontagewagen angetrieben wird, wobei der Hilfsmontagewagen optional auch eine eigenständige Antriebseinheit aufweisen kann. Ein Lenken des Hilfsmontagewagens erfolgt über ein mit einer Führung, insbesondere Führungsschiene, in Eingriff stehendes Führungsrad.

Nachteilig an den bekannten Systemen ist jedoch, dass insbesondere bei einer Anwendung an sehr langsam bewegenden Montageeinheiten der Transfer- oder Hilfswagen entweder in einem nur sehr begrenzten Geschwindigkeitsbereich betreibbar ist oder ein relativ aufwändiges Getriebe zur Antriebsübersetzung erforderlich ist, um sowohl eine sehr langsame Begleitfahrt als auch eine gewünschte schnelle Transferfahrt zu ermöglichen. Die Realisierung des für die zuletzt genannte Variante erforderlichen Getriebes ist jedoch bei einigen, insbesondere sehr schmalen oder flachen Hilfswagen aufgrund der gegebenen Platzverhältnisse - wenn überhaupt - nur mit einem relativ großen Aufwand, insbesondere nur durch relativ komplexe und kostenintensive Systeme möglich.
Die Erfindung hat es sich daher zur Aufgabe gemacht, eine relativ unaufwändig und dadurch kostengünstig herstellbare Begleitversorgungsplattform für eine Montageeinheit der eingangsgenannten Art zu schaffen.

Diese Aufgabe wird durch die in Anspruch 1 wiedergegebene Begleitversorgungsplattform gelöst.

Erfindungsgemäß sind an der Begleitversorgungsplattform zwei unterschiedlich aufgebaute, getrennte Antriebssysteme vorgesehen. Das Gesamtantriebssystem umfasst also zwei unterschiedlich aufgebaute, getrennte Antriebssysteme. Mit dem Begriff "getrennte Antriebssysteme" ist im Rahmen dieser Druckschrift insbesondere gemeint, dass die Antriebsysteme nicht auf gemeinsame Komponenten zurückgreifen, sondern vollständig separat aufgebaut sind. Dies trägt dem Umstand Rechnung, dass sich zwei sehr stark voneinander abweichende Anforderungen bezüglich der Fahrgeschwindigkeit der Begleitversorgungsplattform ergeben. Denn zum einen muss die Begleitversorgungsplattform in der Lage sein, so langsam zu fahren, wie das große Gut. Die Begleitversorgungsplattform kann also bevorzugt langsamer als 1 m pro Minute fahren und ganz besonders bevorzugt mit einer Geschwindigkeit von 1 mm bis 200 mm pro Minute. Diese beiden Antriebssysteme sind bevorzugt unabhängig voneinander nutzbar.

Die beiden Antriebssysteme umfassen insbesondere mindestens zwei unterschiedliche Antriebsräder. Das eine Antriebssystem umfasst bevorzugt genau ein anderes Antriebsrad oder andere Antriebsräder, als das andere Antriebssystem.

Um insbesondere eine schnelle Rückfahrt vom Ende der Montagelinie zum Anfang zu gewährleisten, kann die Begleitversorgungsplattform bevorzugt zudem beispielsweise mit einer für ein Flurförderzeug normalen Geschwindigkeit fahren, also vorzugsweise 16 Meter pro Minute bis 166 Meter pro Minute.

Die Begleitversorgungsplattform kann also vorzugsweise zumindest zwei Geschwindigkeiten fahren, die bevorzugt in einem Verhältnis von 1 zu 80 bis 1 zu 166000 zueinander stehen. Ein derartig großer Geschwindigkeitsbereich oder Geschwindigkeitsunterschied ist über den Regelbereich von Antrieben nicht oder zumindest nicht mit Standardkomponenten abzudecken.

Indem diese zwei derart unterschiedlichen Geschwindigkeiten durch zwei unterschiedliche, getrennte Antriebssysteme abgedeckt werden, kann das Gesamtantriebssystem, wie bevorzugt, auf Standardkomponenten basieren. Vorzugsweise basieren also die beiden getrennten Antriebssysteme auf Standardkomponenten. Weiter bevorzugt umfassen die beiden Antriebssysteme ein Standard Einradtriebwerk oder bauen hierauf auf.

Das Gesamtantriebssystem umfasst bevorzugt auch Lenkkomponenten und kann daher auch als Antriebs- und Lenksystem bezeichnet werden.

Vorzugsweise umfassen die Mittel Überwachungsvorrichtungen, die die Position von Begleitversorgungsplattform und Montageeinheit zueinander kontinuierlich überwachen.

Besonders bevorzugt umfassen die Überwachungsvorrichtungen Distanzsensoren und weiter bevorzugt Positionssensoren. Als Distanzsensoren können beispielsweise Ultraschalsensoren, induktiv arbeitende Sensoren, Lasersensoren oder Radarsensoren vorgesehen sein. Als Positionssensoren können Sensoren vorgesehen sein, die die absolute Lage, etwa über Kontur erfassen, also beispielsweise Lasersensoren oder Radarsensoren.

Vorzugsweise umfassen die Mittel zum selbstständigen, berührungslosen Folgen der Montageeinheit einen Zentralrechner, an den bevorzugt die Daten der Überwachungsvorrichtungen übermittelt werden. Vorzugsweise wird die durch die Überwachungsvorrichtungen ermittelte Position von Begleitversorgungsplattform und Montageeinheit zueinander an den Zentralrechner übermittelt. Der Zentralrechner errechnet bevorzugt aus diesen Informationen die notwendige Korrektur an Geschwindigkeit und/oder Richtung der Begleitversorgungsplattform. Diese übermittelt er bevorzugt an das Antriebssystem.

Übersteigt einer der durch die Sensoren erfassten Werte den jeweils als zulässigen Grenzwert definierten Wert, erfolgt bevorzugt eine Abschaltung des Gesamtsystems der Begleitversorgungsplattform und besonders bevorzugt des gesamten "Fließbandes". Es wird also bevorzugt, wenn einer der durch die Sensoren der Begleitversorgungsplattform erfassten Werte den jeweils als zulässigen Grenzwert definierten Wert übersteigt, die Bewegung des großen Guts und der Versorgungsplattform gestoppt, insbesondere zur Vermeindung von Kollisionen.

Mit Vorteil ist ein Antriebssystem für Eilfahrt vorgesehen, also insbesondere für die Rückfahrt vom Ende der Montagelinie zum Anfang über eine lange Distanz. Dieses Antriebssystem umfasst bevorzugt mindestens eine Antriebseinheit mit einem Standardantrieb, der eine Antriebsbandage, ein Standardgetriebe, einen Motor und eine Bremse umfasst. In einer bevorzugten Ausführungsform besteht der Standardantrieb aus den genannten Komponenten. Die Bremse umfasst bevorzugt eine Elektromagnetbremse.

Bevorzugt umfasst das Antriebssystem für Eilfahrt (also das Eilfahrtantriebssystem) mindestens eine Antriebseinheit und besonders bevorzugt genau zwei Antriebseinheiten.

Mit dem Begriff "Antriebsbandage" wird im Rahmen dieser Druckschrift ein Antriebsreifen oder ein Antriebsrad bezeichnet.

Vorzugsweise ist ein Antriebssystem für Langsamantrieb, insbesondere für den Folgebetrieb vorgesehen. In dem Folgebetrieb folgt die Begleitversorgungsplattform dem großen Gut, dieser Betrieb kann auch als Begleitbetrieb bezeichnet werden. Das Antriebssystem für Langsamantrieb umfasst bevorzugt mindestens eine Antriebseinheit mit einer Antriebsbandage, einem Standardgetriebe, einer bevorzugt elektromagnetisch arbeitende Schaltkupplung, einem hoch übersetzenden Getriebe, einem Motor und einer Bremse. In einer Ausführungsform besteht die Antriebseinheit des Antriebssystems für Langsamantrieb aus diesen Komponenten.

Das Antriebssystem für Langsamantrieb (also das Langsamantriebsantriebssystem) umfasst bevorzugt mindestens eine Antriebseinheit und besonders bevorzugt genau zwei Antriebseinheiten.

Das Antriebssystem für Eilfahrt umfasst bevorzugt mindestens ein Eilantriebsrad und das Antriebssystem für Langsamantrieb umfasst weiter bevorzugt mindestens ein hiervon verschiedenes Langsamantriebsrad.

Das Antriebssystem für Eilfahrt umfasst bevorzugt zwei Eilantriebsräder und das Antriebssystem für Langsamantrieb umfasst weiter bevorzugt zwei hiervon verschiedene Langsamantriebsräder.

Indem das Gesamtantriebssystem, wie bereits erwähnt, bevorzugt ein Eilfahrtantriebssystem und ein Langsamantriebsantriebssystem umfasst, ist eine Voraussetzung dafür geschaffen, dass die Begleitversorgungsplattform zwei Betriebsarten aufweist, nämlich Eilfahrt und Folgebetrieb. Diese werden bevorzugt wie folgt ermöglicht:
Bei Eilfahrt wird die Begleitversorgungsplattform bevorzugt über das Antriebssystem für Eilfahrt bewegt und die mindestens eine Antriebseinheit des Antriebssystems für Langsamantrieb läuft leer als nicht angetriebenes Lastrad mit. Zum Schutz der hinter der Schaltkupplung befindlichen Komponenten dieser Antriebseinheit (hoch übersetztes Getriebe, Motor, Bremse) vor hohen Drehzahlen, werden diese bevorzugt über die Kupplung abgetrennt.

Bei Folgebetrieb ist die Bremse der mindestens einen Antriebseinheit des Antriebssystems für Eilfahrt bevorzugt gelüftet und diese Antriebseinheit läuft weiter bevorzugt leer als nicht angetriebenes Lastrad mit. Der Antrieb erfolgt jetzt über das Antriebssystem für Langsamantrieb, bei dem in dieser Betriebsart die Schaltkupplung das Standardgetriebe mit den vorher getrennten Komponenten koppelt.

Vorzugsweise ist die Begleitversorgungsplattform also wahlweise über das Antriebssystem für Eilfahrt oder über das Antriebssystem für Langsamantrieb antreibbar. Lediglich die mindestens eine Antriebseinheit des Antriebssystems für Langsamantrieb weist dabei eine Schaltkupplung auf, die Komponenten dieser Antriebseinheit während des aktiven Einsatzes des Antriebssystems für Eilfahrt, abtrennt. Denn es hat sich gezeigt, dass das Antriebssystem für Eilfahrt keinen Schaden nimmt, wenn es während des Langsamantriebs passiv mitläuft, ohne dass Komponenten dieses Systems durch eine Kupplung abgetrennt sind.

Jede Antriebseinheit ist bevorzugt lenkbar.

Mit Vorteil weist die Begleitversorgungsplattform einen vollautomatischen Steuerungsmodus und weiter bevorzugt auch einen manuellen Steuerungsmodus auf. Dabei erfolgt die Betriebsart Eilfahrt bevorzugt im manuellen Steuerungsmodus. Die Betriebsart Folgebetrieb, in dem die Begleitversorgungsplattform der Montageeinheit folgt, erfolgt bevorzugt im vollautomatischen Steuerungsmodus.

Bevorzugt umfasst die Begleitversorgungsplattform einen Lastenaufzug. Die Begleitversorgungsplattform kann in dieser Ausführungsform als selbstfahrender Begleitlastenaufzug ausgebildet sein.

Die Erfindung hat es sich auch zur Aufgabe gemacht, eine Montagekolonne für sich sehr langsam bewegende große Güter zu schaffen.

Diese Aufgabe wird durch die in Anspruch 10 wiedergegebene Montagekolonne gelöst.

Die Erfindung umfasst also auch eine Montagekolonne für sich sehr langsam bewegende große Güter mit einer Montageeinheit und einer Begleitversorgungsplattform nach einer der oben beschriebenen Ausführungsformen. Die Montagekolonne kann eine Montage und/oder Bestückungskolonne sein.

Bevorzugt ist die Montageeinheit an dem großen Gut befestigt. Die Montageeinheit weist also vorzugsweise Befestigungsmittel zur Befestigung an dem großen Gut auf. Hierdurch ist ohne weitere Maßnahmen gewährleistet, dass die Montageeinheit dem großen Gut in Geschwindigkeit und Richtung folgt.

Vorzugsweise umfassen die Mittel der Begleitversorgungsplattform zum selbsttätigen, berührungslosen Folgen der Montageeinheit Überwachungsvorrichtungen. An der Montageeinheit sind bevorzugt Vorrichtungen angeordnet, mit denen diese Überwachungsvorrichtungen zusammenwirken.

Die Vorrichtungen umfassen bevorzugt Ziele für Sensoren. Zudem sind an der Montageeinheit bevorzugt Grobausrichtmittel für einen Fahrer vorgesehen. Die Ziele für Sensoren und die Grobausrichtmittel für einen Fahrer sind bevorzugt an einem gemeinsamen Element an der Montageeinheit, nämlich einer Positionierhilfe angeordnet.

Die Sensorziele können Reflektoren und/oder Bohrungen und/oder helle Bereiche umfassen.

Die Grobausrichtmittel können mit dem Auge erkennbare Zeichen umfassen, beispielsweise an der Montageeinheit angeordnete Pfeile, die die korrekte Ausrichtung der Versorgungsplattform zur Montageeinheit anzeigen. Die Grobausrichtmittel können auch die korrekte Ausrichtung von Teilen oder Bereichen, etwa den Außenkanten der Versorgungsplattform zur Montageeinheit anzeigen.

Die Grobausrichtmittel können helle Bereiche umfassen, die es für den Fahrer erkennbar machen, wenn ein Laserstrahl eines Sensors auf ihnen positioniert ist.

Die Erfindung soll nun anhand eines in den Zeichnungen gezeigten Ausführungsbeispiels näher erläutert werden. Es zeigen:
- Fig. 1: eine perspektivische Darstellung eines großen Guts, an dem eine Montageeinheit befestigt ist, der eine erfindungsgemäße Begleitversorgungsplattform folgt;
- Fig. 2: eine Ansicht von oben auf eine Begleitversorgungsplattform und einen Teil einer Montageeinheit;
- Fig. 3: eine Frontalansicht eines Teils des Antriebssystems für Folgebetrieb;
- Fig. 4: eine Ansicht eines Teils des Antriebssystems für Eilfahrt;
- Fig. 5: eine Ansicht von oben auf einen Teil einer Begleitversorgungsplattform und einer Montageeinheit;

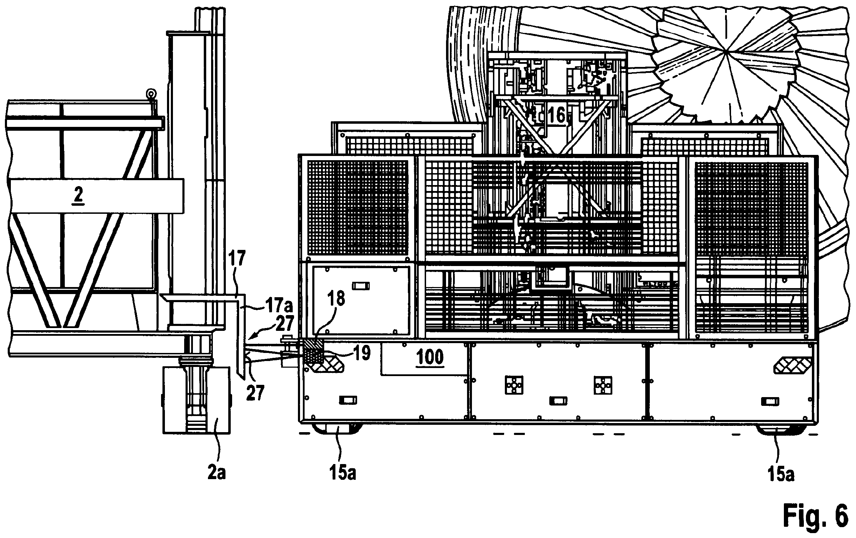

- Fig. 6: eine Seitenansicht einer Begleitversorgungsplattform und eines Teils einer Montageeinheit;

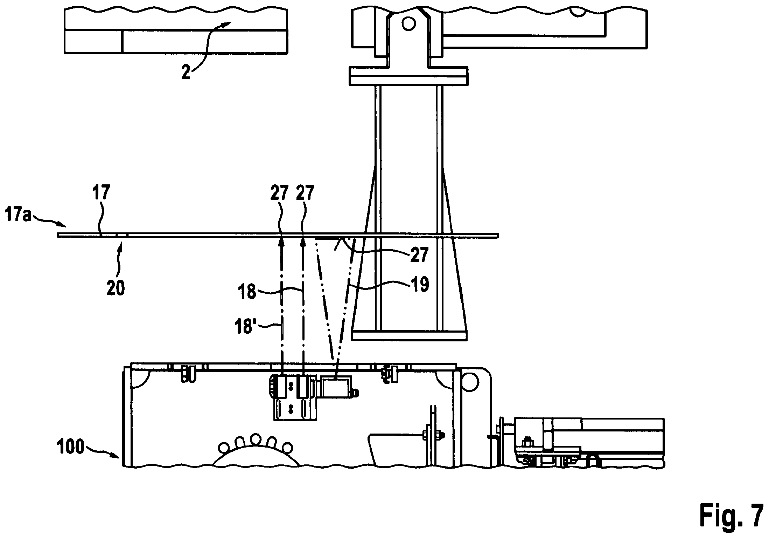

- Fig. 7: eine Detailansicht von oben auf einen Teil einer Begleitversorgungsplattform und einer Montageeinheit;
- Fig. 8: eine Darstellung einer Anzeige der Begleitversorgungsplattform, die dem Nutzer die Grobausrichtung der Begleitversorgungsplattform zur Montageeinheit erleichtert;
- Fig. 9, 10: eine Anfahrt der Begleitversorgungsplattform an die Montageeinheit mit Blick von oben;
- Fig. 11, 12: eine Grobausrichtung der Begleitversorgungsplattform relativ zur Montageeinheit, mit Blick von der Seite;
- Fig. 13: eine Darstellung wie in Fig. 11 und Fig. 12, jedoch nach erfolgter Grobausrichtung.

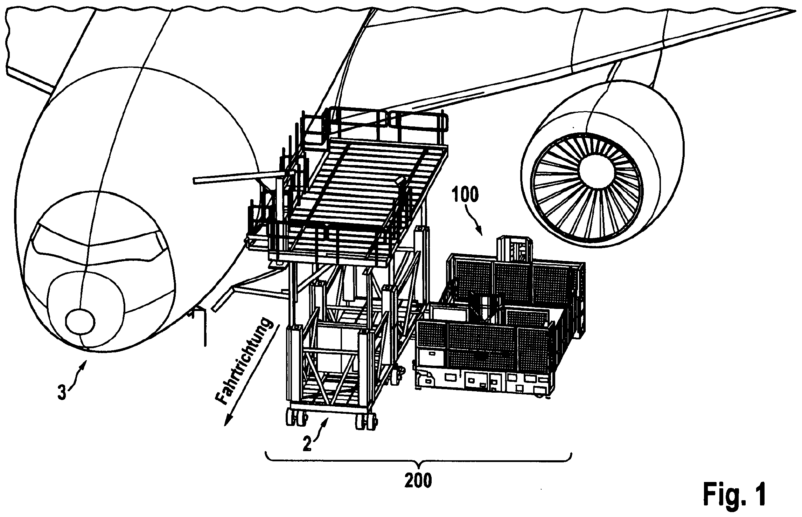

Fig. 1 zeigt die als Ganzes mit 100 bezeichnete Begleitversorgungsplattform im Folgebetrieb. Eine Montageplattform 2 ist an einem großen Gut, nämlich einem Flugzeug, befestigt. Das große Gut 3 und die Montageplattform 2 bewegen sich mit der gleichen, sehr niedrigen Geschwindigkeit, beispielsweise 1 mm bis 100 mm pro Minute. Die Begleitversorgungsplattform 100 folgt der Montageeinheit 2 in Geschwindigkeit und Richtung, ohne diese zu berühren. Die Begleitversorgungsplattform 100 belastet daher die Befestigungsmittel zwischen Begleitversorgungsplattform 2 und großem Gut 3 nicht.

Zur Realisierung des berührungslosen Folgens weist die Begleitversorgungsplattform 100 ein Gesamtantriebssystem 1 auf, welches seinerseits zwei unterschiedlich aufgebaute, getrennte Antriebssysteme 7, 8 aufweist. Das eine Antriebssystem 7 umfasst andere Antriebsräder 15a, als das andere Antriebssystem 8.

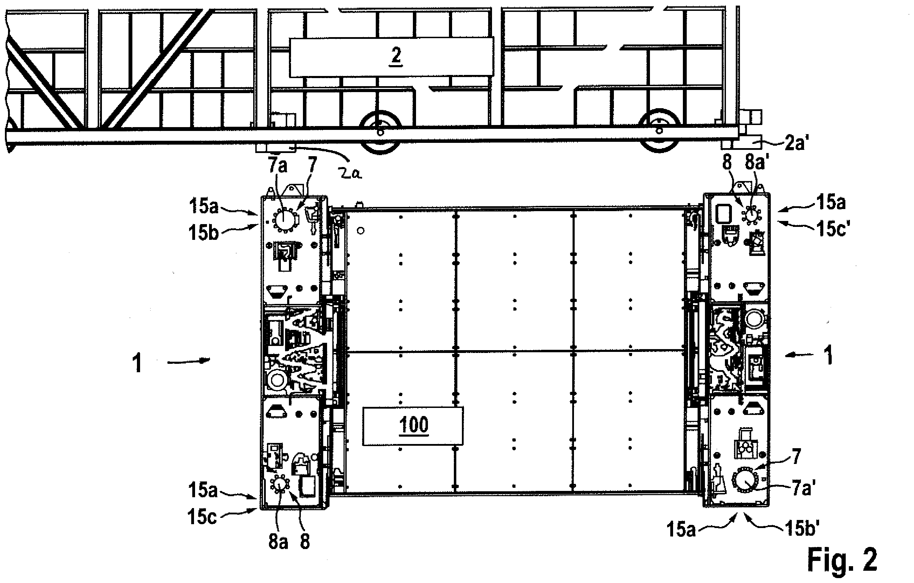

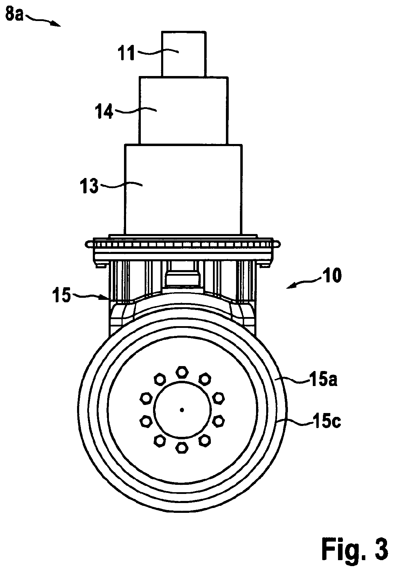

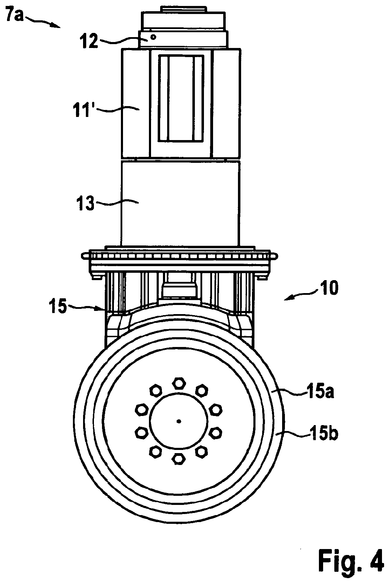

Die Begleitversorgungsplattform 100 weist im gezeigten Ausführungsbeispiel vier Räder auf. Jedes Rad ist angetrieben, so dass vier Antriebsräder 15a vorgesehen sind. Wie Fig. 2 zeigt, umfassen das Antriebssystem für Eilfahrt 7 und das Antriebssystem für Folgebetrieb 8 jeweils zwei Antriebseinheiten 7a, 7a', 8a, 8a' und die Figuren 3 und 4 zeigen, dass jede Antriebseinheit 8a, 7a genau ein Antriebsrad 15a umfasst. Die beiden Antriebseinheiten eines Antriebssystems 7, 8 sind dabei jeweils diagonal angeordnet, also an schräg gegenüberliegenden Ecken der Begleitversorgungsplattform 100.

Das Antriebssystem für Eilfahrt 7 umfasst zwei Eilantriebsräder 15b, 15b' und das Antriebssystem für Folgebetrieb 8 umfasst zwei hiervon verschiedene Langsamantriebsräder 15c, 15c'.

Fig. 3 zeit den Aufbau einer der beiden Antriebseinheiten 8a des Antriebssystems 8 für Folgebetrieb. Diese Antriebseinheit 8a besteht im gezeigten Ausführungsbeispiel aus einem Antriebsrad 15a, einem Standardgetriebe 10, einer elektromagnetischen Schaltkupplung 13, einem hoch übersetzenden Getriebe 14, einem Motor 11 und einer Bremse.

Die in Fig. 4 gezeigte Antriebseinheit 7a für Eilfahrt umfasst einen Standardantrieb bestehend aus Antriebsrad 15a, Standardgetriebe 10, Motor 11' und Elektromagnetbremse 12. Zudem ist eine elektrische Schaltkupplung 13 vorgesehen. Beide Antriebseinheiten der beiden Antriebssysteme sind also überwiegend aus Standardkomponenten zusammengesetzt.

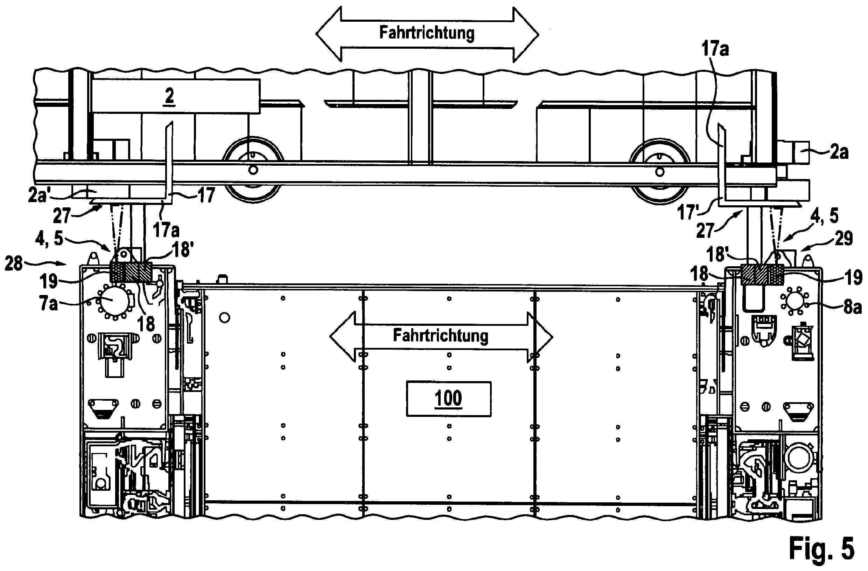

Um der Montageeinheit 2 selbsttätig, berührungslos folgen zu können, weist die Begleitversorgungsplattform 100 Mittel 4 auf, die Überwachungsvorrichtungen 5 umfassen. Die Überwachungsvorrichtungen 5 überwachen die Position der Begleitversorgungsplattform 100 und der Montageeinheit 2 zueinander kontinuierlich. Die Überwachungsvorrichtungen 5 umfassen Distanzsensoren 18, 18' und Positionssensoren 19. Fig. 5 zeigt die schematische Anordnung der Positions-/ Abstandssensorik.

Um die Position zweier Bereiche der Begleitversorgungsplattform 100 und damit die Position der gesamten Begleitversorgungsplattform 100 relativ zu der Montageeinheit 2 bestimmen zu können, sind in zwei verschiedenen Bereichen der Begleitversorgungsplattform 100 Sensoren 18, 18', 19 vorgesehen. In jedem Sensorbereich 28, 29 der Begleitversorgungsplattform 100 sind im gezeigten Ausführungsbeispiel zwei Distanzsensoren 18, 18' angeordnet. Die Distanzsensoren 18, 18' sind redundant geschaltet. In jedem Sensorbereich 28, 29 ist also ein redundanter Distanzsensor 18 vorgesehen. Hierdurch wird eine Kollision der Begleitversorgungsplattform 100 mit der Montageeinheit 2 sicher vermieden. Die Distanzsensoren 18 regeln die Lenkung der Begleitversorgungsplattform 100. In jedem Sensorbereich 28, 29 der Begleitversorgungsplattform 100 ist zudem ein Positionssensor 19 vorgesehen. Dieser regelt die Geschwindigkeit der Begleitversorgungsplattform 100.

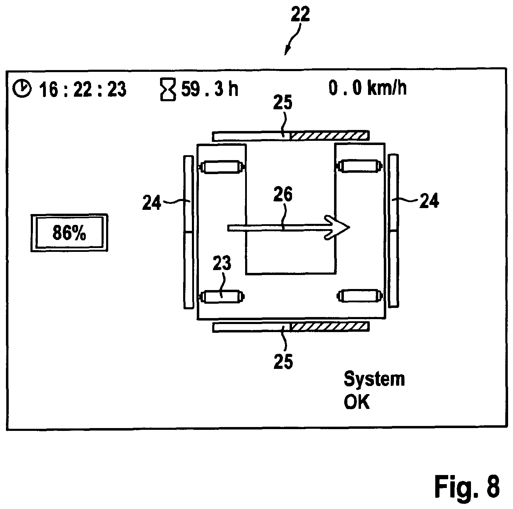

Fig. 8 zeigt ein Display, welches es dem Fahrer der Begleitversorgungsplattform 100 erleichtert, diese relativ zu der Montageeinheit 2 grob auszurichten, d. h. soweit auszurichten, dass die Sensoren 18, 19 mit Hilfe des Zentralrechners die weitere Steuerung der Begleitversorgungsplattform 100 übernehmen können. Das in Fig. 8 gezeigte Display erleichtert also den Übergang von dem manuellen Steuerungsmodus in den vollautomatischen Steuerungsmodus. Zu diesem Zweck sind zwei zueinander parallele Positionsanzeigen 4 vorgesehen, die die Parallelität der Begleitversorgungsplattform 100 zu der Montageeinheit 2 anzeigen. Senkrecht zu diesen sind zwei weitere, ebenfalls parallel zueinander angeordnete Positionsanzeigen 25 vorgesehen, die die Mittigkeit der Begleitversorgungsplattform 100 zu der Montageeinheit 2 anzeigen. Der schraffierte Bereich der letztgenannten Positionsanzeigen 25 symbolisiert dabei, zusammen mit dem Pfeil 26 eine Aufforderung an den Fahrer, dass Fahrzeug entsprechend der Fallrichtung zu bewegen. Wenn diese schraffierten Bereiche, wie bei den Positionsanzeigen 24, die die Parallelität anzeigen, klein sind, bedeutet dies, dass die Position der Begleitversorgungsplattform 100 in dieser Richtung korrekt ist.

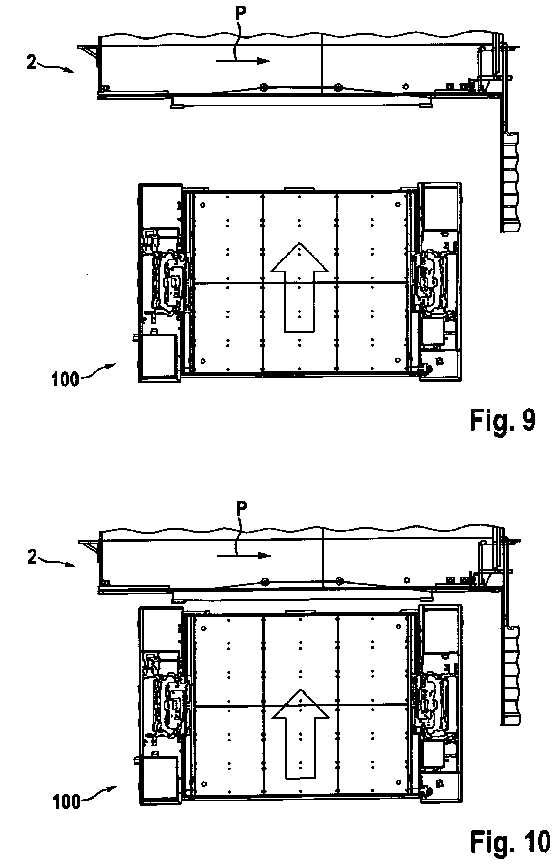

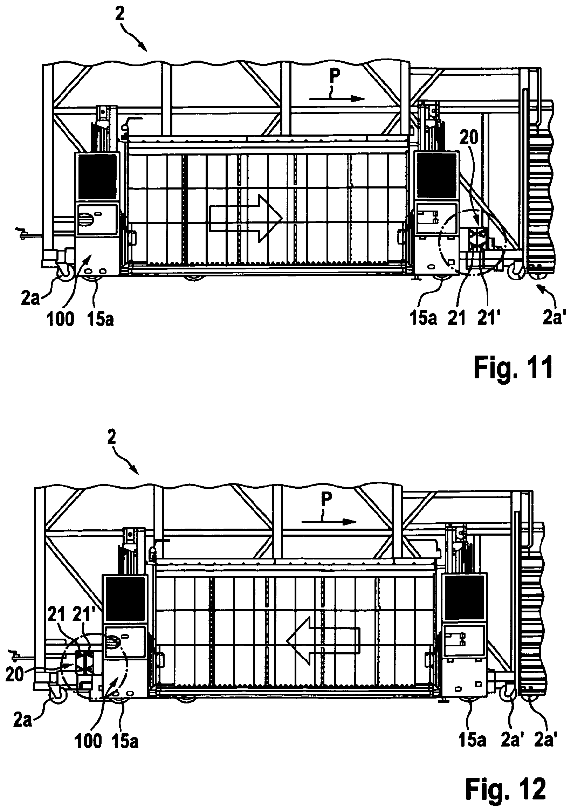

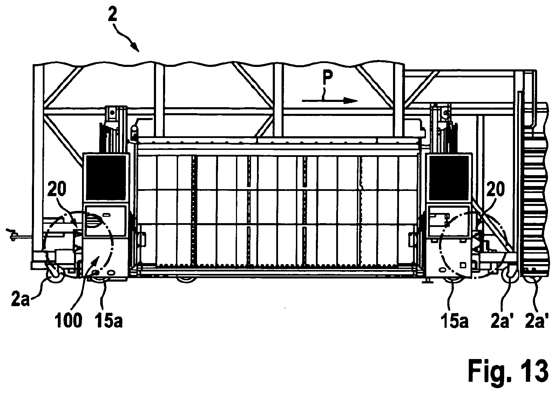

Die Figuren 9 bis 13 zeigen fünf Schritte der Grobausrichtung der Begleitversorgungsplattform 100 zu der Montageeinheit 2. Diese Grobausrichtung wird im manuellen Steuerungsmodus, d. h. von dem Fahrer der Begleitversorgungsplattform 100 vollzogen. Die Figuren 9 und 10 zeigen die Anfahrt der Begleitversorgungsplattform 100 an die Montageeinheit 2, soweit, bis die gewünschte Distanz erreicht ist. Daraufhin wird die Position der Begleitversorgungsplattform 100 in Fahrtrichtung, die in den Figuren 9 bis 11 durch den Pfeil P symbolisiert ist, korrigiert. Dies geschieht mit Hilfe von Grobausrichtmitteln 20, die Pfeile 21, 21' umfassen, die dem Fahrer die richtige Position der Vorder- und Hinterkante der Begleitversorgungsplattform zu der Montageeinheit 2 anzeigen. Fig. 11 zeigt dabei die Position, in der die Begleitversorgungsplattform 100 zu weit links angeordnet ist, während Fig. 12 die Position zeigt, in der die Begleitversorgungsplattform 100 zu weit rechts angeordnet ist. Fig. 13 zeigt die korrekte Ausrichtung. In dieser erfolgt eine Umschaltung von dem manuellen Steuerungsmodus in den vollautomatischen Steuerungsmodus, in dem die Begleitversorgungsplattform 100 der Montageeinheit 2 selbsttätig, berührungslos folgt.

Fig. 1 zeigt auch die Montagekolonne 200, die die Montageeinheit 2 und eine Begleitversorgungsplattform 100 umfasst.

An der Montageeinheit 2 sind, wie dies Fig. 5 näher zeigt, Vorrichtungen 17 angeordnet, mit denen die Überwachungsvorrichtungen 5 der Montageeinheit 2 zusammenwirken. Die Vorrichtungen 17, 17' umfassen für jeden Sensorbereich 28, 29 der Begleitversorgungsplattform 100 genau eine Positionierhilfe 17a. Auf dieser sind Sensorziele 27 angeordnet, die als Bohrungen, Reflektoren oder helle Bereiche ausgestaltet sein können.

### Bezugszeichenliste:

- 100: Begleitversorgungsplattform
- 200: Montagekolonne
- 1: Gesamtantriebssystem
- 2: Montageeinheit
- 2a, 2a': Räder
- 3: großes Gut
- 4: Mittel
- 5: Überwachungsvorrichtungen
- 6: -
- 7: Antriebssystem für Eilfahrt bzw. normale Fahrt
- 7a, 7a': Antriebseinheit für Eilfahrt bzw. normale Fahrt
- 8: Antriebssystem für Folgebetrieb
- 8a, 8a': Antriebseinheit für Folgebetrieb
- 9: -
- 10: Standardgetriebe
- 11: Motor bzw. Antriebsmotor
- 11': Standardantriebsmotor
- 12: Bremse
- 13: Schaltkupplung
- 14: hoch übersetzendes Getriebe bzw. Vorgelegegetriebe
- 15: Standardeinradtriebwerk
- 15a: Antriebsräder
- 15b, 15b': Eilantriebsräder
- 15c, 15c': Langsamantriebsräder
- 16: Lastenaufzug
- 17, 17': Vorrichtungen
- 17a: Positionierhilfe
- 18, 18': Distanzsensor
- 19: Positionssensor
- 20: Grobausrichtmittel
- 21, 21': Pfeile
- 22: Anzeige
- 23: Reifenpositionsanzeige
- 24: Positionsanzeige bezüglich der Parallelität
- 25: Positionsanzeige bezüglich der Mittigkeit
- 26: Bewegungsanweisung (Pfeil)
- 27: Sensorziele
- 28,29: Sensorbereiche
- P: Pfeil

## Patentansprüche

1. Begleitversorgungsplattform (100) mit einem Gesamtantriebssystem (1), für eine sich sehr langsam bewegende Montageeinheit (2) großer Güter (3), wobei die Begleitversorgungsplattform (100) Mittel (4) aufweist, zum selbsttätigen, berührungslosen Folgen der Montageeinheit (2),
**dadurch gekennzeichnet,**
**dass** die Begleitversorgungsplattform (100) zwei unterschiedlich aufgebaute, getrennte Antriebssysteme (7, 8) aufweist, wobei das eine Antriebssystem (7) ein anderes Antriebsrad oder andere Antriebsräder (15a) umfasst, als das andere Antriebssystem (8).

2. Begleitversorgungsplattform nach Anspruch 1, **dadurch gekennzeichnet, dass** die Mittel (4) Überwachungsvorrichtungen umfassen, die die Position von Begleitversorgungsplattform (100) und Montageeinheit (2) zueinander kontinuierlich überwachen.

3. Begleitversorgungsplattform nach Anspruch 2, **dadurch gekennzeichnet, dass** die Überwachungsvorrichtungen (5) Distanzsensoren (18, 18') und Positionssensoren (19) umfassen.

4. Begleitversorgungsplattform nach einem der Ansprüche 1 bis 3, **dadurch gekennzeichnet, dass** die Mittel (4) einen Zentralrechner umfassen, an den die durch die Überwachungsvorrichtungen (5) ermittelte Position von Begleitversorgungsplattform (100) und Montageeinheit (2) zueinander übermittelt wird und der aus diesen Informationen notwendige Korrekturen an Geschwindigkeit und Richtung der Begleitversorgungsplattform (100) errechnet und an das Antriebssystem (1) übermittelt.

5. Begleitversorgungsplattform nach einem der Ansprüche 1 bis 4, **dadurch gekennzeichnet, dass** beide Antriebssysteme (7, 8) auf Standardkomponenten basieren.

6. Begleitversorgungsplattform nach einem der Ansprüche 1 bis 5, **dadurch gekennzeichnet, dass** ein Antriebssystem (7) für Eilfahrt vorgesehen ist, welches einen Standardantrieb mit Antriebsbandage (15a), Standardgetriebe (10), Motor (11) und Bremse (12) umfasst, und ein Antriebssystem (8) für Langsamantrieb für Folgebetrieb vorgesehen ist, mit einer Antriebsbandage (15a), einem Standardgetriebe (10), einer Schaltkupplung (13), einem hoch übersetzenden Getriebe (14), einem Motor (11) und einer Bremse.

7. Begleitversorgungsplattform nach einem der Ansprüche 1 bis 6, **dadurch gekennzeichnet, dass** die Begleitversorgungsplattform (100) einen vollautomatischen Steuerungsmodus und einen manuellen Steuerungsmodus aufweist.

8. Begleitversorgungsplattform nach einem der Ansprüche 1 bis 7, **dadurch gekennzeichnet, dass** die Begleitversorgungsplattform (100) einen Lastenaufzug (16) umfasst.

9. Begleitversorgungsplattform nach einem der Ansprüche 1 bis 8, **dadurch gekennzeichnet, dass** die Montageeinheit (2) an dem großen Gut (3) befestigt ist.

10. Begleitversorgungsplattform nach Anspruch 9, **dadurch gekennzeichnet, dass** die Mittel (4) zum selbstständigen, berührungslosen Folgen der Montageeinheit (2) Überwachungsvorrichtungen (5) umfassen, und dass vorzugsweise an der Montageeinheit (2) Vorrichtungen (17, 17') angeordnet sind, mit denen die Überwachungsvorrichtungen (5) zusammenwirken.

11. Begleitversorgungsplattform nach Anspruch 10, **dadurch gekennzeichnet, dass** die Vorrichtungen (17, 17') Ziele (27) für Sensoren umfassen und Grobausrichtmittel (20) für einen Fahrer vorgesehen sind und die Sensorziele (27) und die Grobausrichtmittel (20) an einem gemeinsamen Element an der Montageeinheit (2), nämlich einer Positionierhilfe (17a) angeordnet sind.

## Claims

1. Accompanying supply platform (100) comprising an overall drive system (1), for a very slow-moving mounting unit (2) for large goods (3), the accompanying supply platform (100) having means (4) for following the mounting unit (2) automatically and without contact, **characterized in that** the accompanying supply platform (100) has two differently constructed, separate drive systems (7, 8), one drive system (7) comprising a different drive wheel or different drive wheels (15a) than the other drive system (8).

2. Accompanying supply platform according to claim 1, **characterized in that** the means (4) comprise monitoring devices that continuously monitor the position of the accompanying supply platform (100) and mounting unit (2) in relation to one another.

3. Accompanying supply platform according to claim 2, **characterized in that** the monitoring devices (5) comprise distance sensors (18, 18') and position sensors (19).

4. Accompanying supply platform according to any of claims 1 to 3, **characterized in that** the means (4) comprise a central computer to which the position of the accompanying supply platform (100) and of the mounting unit (2) in relation to one another, determined by the monitoring devices (5), is transmitted and which calculates the necessary corrections to the speed and direction of the accompanying platform (100) from this information and transmits said corrections to the drive system (1).

5. Accompanying supply platform according to any of claims 1 to 4, **characterized in that** both drive systems (7, 8) are based on standard components.

6. Accompanying supply platform according to any of claims 1 to 5, **characterized in that** a drive system (7) is provided for high-speed travel, which drive system comprises a standard drive having a drive band (15a), a standard transmission (10), a motor (11) and a brake (12), and **in that** a drive system (8) is provided for low-speed travel for a following operation, having a drive band (15a), a standard transmission (10), a clutch (13), a high-ratio transmission (14), a motor (11) and a brake.

7. Accompanying supply platform according to any of claims 1 to 6, **characterized in that** the accompanying supply platform (100) has a fully automatic control mode and a manual control mode.

8. Accompanying supply platform according to any of claims 1 to 7, **characterized in that** the accompanying supply platform (100) comprises a freight elevator (16).

9. Accompanying supply platform according to any of claims 1 to 8, **characterized in that** the mounting unit (2) is attached to the large good (3).

10. Accompanying supply platform according to claim 9, **characterized in that** the means (4) comprise monitoring devices (5) for following the mounting unit (2) automatically and without contact, and **in that** devices (17, 17') with which the monitoring devices (5) interact are preferably arranged on the mounting unit (2).

11. Accompanying supply platform according to claim 10, **characterized in that** the devices (17, 17') comprise targets (27) for sensors, and rough alignment means (20) are provided for a driver, and the sensor targets (27) and the rough alignment means (20) are arranged on a common element on the mounting unit (2), specifically a positioning aid (17a).

## Revendications

1. Plate-forme d'approvisionnement associée (100) comportant un système d'entraînement global (1), pour une unité de montage (2) de grandes marchandises (3) qui se déplace très lentement, la plate-forme d'approvisionnement associée (100) présentant des moyens (4) pour le suivi automatique, sans contact, de l'unité de montage (2), **caractérisée en ce que** la plate-forme d'approvisionnement associée (100) présente deux systèmes d'entraînement (7, 8) séparés, de construction différente, l'un système d'entraînement (7) comprenant une roue motrice différente ou des roues motrices (15a) différentes de l'autre système d'entraînement (8).

2. Plate-forme d'approvisionnement associée selon la revendication 1, **caractérisée en ce que** les moyens (4) comprennent des dispositifs de surveillance qui surveillent en permanence la position de la plate-forme d'approvisionnement associée (100) et de l'unité de montage (2) l'une par rapport à l'autre.

3. Plate-forme d'approvisionnement associée selon la revendication 2, **caractérisée en ce que** les dispositifs de surveillance (5) comprennent des capteurs de distance (18, 18') et des capteurs de position (19).

4. Plate-forme d'approvisionnement associée selon l'une des revendications 1 à 3, **caractérisée en ce que** les moyens (4) comprennent un ordinateur central auquel est transmise la position relative de la plate-forme d'approvisionnement associée (100) et de l'unité de montage (2), déterminée par les dispositifs de surveillance (5), et qui calcule, à partir de ces informations, les corrections nécessaires de la vitesse et de la direction de la plate-forme d'approvisionnement associée (100) et les transmet au système d'entraînement (1).

5. Plate-forme d'approvisionnement associée selon l'une des revendications 1 à 4, **caractérisée en ce que** les deux systèmes d'entraînement (7, 8) sont basés sur des composants standard.

6. Plate-forme d'approvisionnement associée selon l'une quelconque des revendications 1 à 5, **caractérisée en ce qu'**un système d'entraînement (7) est prévu pour la marche rapide, lequel système d'entraînement comprend un entraînement standard comportant un bandage d'entraînement (15a), un engrenage standard (10), un moteur (11) et un frein (12), et un système d'entraînement (8) pour le fonctionnement lent est prévu pour le fonctionnement suivant, comportant un bandage d'entraînement (15a), un engrenage standard (10), un embrayage (13), un engrenage à rapport de transmission élevé (14), un moteur (11) et un frein.

7. Plate-forme d'approvisionnement associée selon l'une des revendications 1 à 6, **caractérisée en ce que** la plate-forme d'approvisionnement associée (100) présente un mode de commande entièrement automatique et un mode de commande manuelle.

8. Plate-forme d'approvisionnement associée selon l'une des revendications 1 à 7, **caractérisée en ce que** la plate-forme d'approvisionnement associée (100) comprend un monte-charge (16).

9. Plate-forme d'approvisionnement associée selon l'une des revendications 1 à 8, **caractérisée en ce que** l'unité de montage (2) est fixée à la grande marchandise (3).

10. Plate-forme d'alimentation associée selon la revendication 9, **caractérisée en ce que** les moyens (4) pour le suivi automatique, sans contact, de l'unité de montage (2) comprennent des dispositifs de surveillance (5), et **en ce que**, de préférence au niveau de l'unité de montage (2), des dispositifs (17, 17') sont agencés, lesquels dispositifs coopèrent avec les dispositifs de surveillance (5).

11. Plate-forme d'approvisionnement associée selon la revendication 10, **caractérisée en ce que** les dispositifs (17, 17') comprennent des cibles (27) pour des capteurs et des moyens d'alignement grossier (20) sont prévus pour un conducteur, et **en ce que** les cibles (27) de capteurs et les moyens d'alignement grossier (20) sont agencés au niveau d'un élément commun sur l'unité de montage (2), notamment au niveau d'un dispositif d'aide au positionnement (17a).
